(19) Europäisches Patentamt
European Patent Office
Office européen des brevets

(11) EP 4 637 059 A1

(12) EUROPEAN PATENT APPLICATION
published in accordance with Art. 153(4) EPC

(43) Date of publication:
22.10.2025 Bulletin 2025/43

(51) International Patent Classification (IPC):
H04L 1/00 (2006.01)    H04L 5/00 (2006.01)

(21) Application number: 23910492.0

(52) Cooperative Patent Classification (CPC):
H04L 1/00; H04L 1/1607; H04L 1/1812; H04L 5/00

(22) Date of filing: 25.12.2023

(86) International application number:
PCT/CN2023/141544

(87) International publication number:
WO 2024/140566 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.12.2022 CN 202211738148

(71) Applicant: Huawei Technologies Co., Ltd.
Shenzhen, Guangdong 518129 (CN)

(72) Inventors:
• RUAN, Liang
  Shenzhen, Guangdong 518129 (CN)
• LIU, Kunpeng
  Shenzhen, Guangdong 518129 (CN)
• DONG, Changzhao
  Shenzhen, Guangdong 518129 (CN)

(74) Representative: Epping - Hermann - Fischer
Patentanwaltsgesellschaft mbH
Schloßschmidstraße 5
80639 München (DE)

(54) COMMUNICATION METHOD, COMMUNICATION DEVICE, MEDIUM, AND PROGRAM PRODUCT

(57) Embodiments of the present disclosure provide a communication method, a communication device, a computer-readable storage medium, and a computer program product. The communication method includes: A network device sends downlink control information to a terminal device, where the downlink control information indicates an identifier of a hybrid automatic repeat request (HARQ) process, and the identifier of the HARQ process is associated with a physical downlink shared channel (PDSCH); the network device sends the PDSCH to the terminal device; the network device receives indication information from the terminal device, where the indication information indicates a receiving status level of the terminal device for the PDSCH; and the network device determines, based on the indication information, a receiving status of the terminal device for the PDSCH. In this manner, the network device can quickly respond to real-time channel and interference changes.

FIG. 3

**Description**

The present disclosure claims priority to Chinese Patent Application No. 202211738148.6, filed with the China National Intellectual Property Administration on December 30, 2022 and entitled "COMMUNICATION METHOD, COMMUNICATION DEVICE, MEDIUM, AND PROGRAM PRODUCT", which is incorporated herein by reference in its entirety.

**TECHNICAL FIELD**

The present disclosure generally relates to the communication field, and more specifically, to a communication method, a communication device, a computer-readable storage medium, and a computer program product.

**BACKGROUND**

Modulation and coding scheme (MCS) adaptation greatly affects transmission efficiency and performance of a communication system. The MCS adaptation is based on a combined effect of channel measurement and hybrid automatic repeat request (HARQ) feedback, that is, based on inner loop link adaptation (ILLA) and outer loop link adaptation (OLLA). In the inner loop link adaptation, a terminal measures CSI based on a channel state information (CSI) reference signal (CSI-RS), and feeds back a measurement result to a base station. In the outer loop link adaptation, the base station adjusts an MCS based on a HARQ feedback of acknowledgment (ACK)/negative acknowledgment (NACK) from the terminal device for sent downlink data. However, the MCS adaptation still has some problems to be resolved in terms of the communication efficiency, a communication procedure, and the like.

**SUMMARY**

In view of this, embodiments of the present disclosure provide a communication method, a communication device, a computer-readable storage medium, and a computer program product. A first aspect of the present disclosure provides a communication method. The method includes: A network device sends downlink control information to a terminal device, where the downlink control information indicates an identifier of a hybrid automatic repeat request HARQ process, and the identifier of the HARQ process is associated with a physical downlink shared channel PDSCH; the network device sends the PDSCH to the terminal device; the network device receives indication information from the terminal device, where the indication information indicates a receiving status level of the terminal device for the PDSCH; and the network device determines, based on the indication information, a receiving status of the terminal device for the PDSCH. In this manner, the network device can quickly respond to real-time channel and interference changes. In some embodiments, the method further includes: The network device obtains a hybrid automatic repeat request HARQ feedback for the HARQ process from the terminal device, where the HARQ feedback includes other indication information, and the other indication information indicates an acknowledgment ACK or a negative acknowledgment NACK; and that the receiving status level of the terminal device for the PDSCH is determined includes: The network device determines the receiving status level of the terminal device for the PDSCH based on the indication information and the other indication information. Therefore, the network device can more accurately learn of real-time channel and interference changes.

In some embodiments, the HARQ feedback indicates the NACK, and the receiving status level for the PDSCH includes at least a first receiving status level and a second receiving status level. Determining the receiving status of the terminal device for the PDSCH includes: The network device determines, based on that the indication information indicates the first receiving status level, that receiving performance of the terminal device for the PDSCH is lower than a first threshold; or the network device determines, based on that the indication information indicates the second receiving status level, that receiving performance of the terminal device for the PDSCH is lower than a second threshold. In this way, the network device can effectively determine receiving performance at the terminal device when the HARQ feedback is the NACK.

In some embodiments, the HARQ feedback indicates the ACK, and the receiving status level for the PDSCH includes at least a first receiving status level and a second receiving status level. Determining the receiving status of the terminal device for the PDSCH includes: The network device determines, based on that the indication information indicates the first receiving status level, that receiving performance of the terminal device for the PDSCH is higher than a third threshold; or the network device determines, based on that the indication information indicates the second receiving status level, that receiving performance of the terminal device for the PDSCH is higher than a fourth threshold. In this way, the network device can effectively determine receiving performance at the terminal device when the HARQ feedback is the ACK.

In some embodiments, the indication information is included in the HARQ feedback. In this way, effective transmission of the indication information is implemented.

In some embodiments, the HARQ feedback includes a first HARQ feedback and a second HARQ feedback, the first HARQ feedback indicates the ACK or the NACK, and the second HARQ feedback indicates the receiving status level. In this way, an ACK or NACK feedback and the indication information can be both indicated in the HARQ feedback.

In some embodiments, the first HARQ feedback includes one bit, and the second HARQ feedback includes at least one bit. Therefore, a joint feedback of the ACK or NACK feedback and the indication information can be effectively implemented.

In some embodiments, the HARQ feedback includes a plurality of bits, and the plurality of bits correspond to a plurality of values. Each of the plurality of values corresponds to one of one or more receiving status levels associated with the ACK or the NACK. Therefore, a finer-grained feedback of the receiving status level is implemented.

In some embodiments, the HARQ feedback includes two bits, and the two bits correspond to four values. One of the four values corresponds to one receiving status level associated with the ACK, and the other three of the four values respectively correspond to three receiving status levels associated with the NACK. Alternatively, one of the four values corresponds to one receiving status level associated with the NACK, and the other three of the four values respectively correspond to three receiving status levels associated with the ACK. Therefore, a finer-grained feedback of the receiving status level is implemented.

In some embodiments, the indication information is received on a resource of a physical uplink control channel PUCCH or a physical uplink shared channel PUSCH. In this way, effective transmission of the indication information is implemented.

In some embodiments, the method further includes: The network device sends an indication for the resource to the terminal device by using radio resource control RRC signaling or the downlink control information. In this way, a transmission resource can be effectively determined.

In some embodiments, the method further includes: The network device receives a scheduling request for a resource from the terminal device. In this way, resource scheduling can be implemented based on the request.

In some embodiments, the method further includes: The network device determines, based on the indication information, a modulation and coding scheme MCS used for the PDSCH for the terminal device. Therefore, the network device may configure the MCS in real time based on the determined real-time channel and interference changes, to match a channel feature.

In some embodiments, the method further includes: The network device determines, based on the indication information, a target adjustment amount from a plurality of candidate adjustment amounts for outer loop link adaptation OLLA. In addition, determining the MCS used for the PDSCH for the terminal device includes: The network device determines, based on the target adjustment amount, the MCS used for the PDSCH for the terminal device. In this way, MCS adjustment can be accurately implemented.

In some embodiments, the plurality of candidate adjustment amounts include at least a first candidate adjustment amount and a second candidate adjustment amount, and the receiving status level for the PDSCH includes at least a first receiving status level and a second receiving status level. Determining the target adjustment amount includes one of the following: determining, based on that the indication information indicates the first receiving status level, the target adjustment amount as the first candidate adjustment amount; or determining, based on that the indication information indicates the second receiving status level, the target adjustment amount as the second candidate adjustment amount. In this way, the target adjustment amount can be effectively determined.

In some embodiments, the HARQ feedback indicates the NACK, the OLLA is associated with signal to interference plus noise ratio SINR adjustment, and the method may further include adjusting an SINR in the following manner: The network device determines, based on that the determined target adjustment amount is the first candidate adjustment amount, an adjusted SINR as a previous SINR minus the first candidate adjustment amount; or the network device determines, based on that the determined target adjustment amount is the second candidate adjustment amount, an adjusted SINR as a previous SINR minus the second candidate adjustment amount. Therefore, the network device can effectively adjust the SINR when the HARQ feedback is the NACK.

In some embodiments, the HARQ feedback indicates the ACK, the OLLA is associated with SINR adjustment, and the method may further include adjusting an SINR in the following manner: The network device determines, based on that the determined target adjustment amount is the first candidate adjustment amount, an adjusted SINR as a previous SINR plus the first candidate adjustment amount; or the network device determines, based on that the determined target adjustment amount is the second candidate adjustment amount, an adjusted SINR as a previous SINR plus the second candidate adjustment amount. Therefore, the network device can effectively adjust the SINR when the HARQ feedback is the ACK.

In some embodiments, the indication information is common indication information for a plurality of HARQ processes, and is used by the network device to determine a receiving status of the terminal device for a plurality of PDSCHs associated with the plurality of HARQ processes. Therefore, based on the common indication information, signaling overheads can be effectively reduced, and overall latency can be reduced.

A second aspect of the present disclosure provides a communication method. The method includes: A terminal device receives downlink control information from a network device, where the downlink control information indicates an identifier of a hybrid automatic repeat request HARQ process, and the identifier of the HARQ process is associated with a physical downlink shared channel PDSCH; the terminal device receives the PDSCH from the network device; the terminal device determines a receiving status level for the PDSCH; and the terminal device sends indication information to the network device, where the indication information indicates the receiving status level for the PDSCH. In this manner, the terminal device feeds back the receiving status level, so that the network device can quickly respond to real-time channel and interference changes.

In some embodiments, the method further includes: The terminal device determines, based on receiving performance for the PDSCH, an acknowledgment ACK or a negative acknowledgment NACK of a hybrid automatic repeat request HARQ feedback for a HARQ process and the receiving status level. Therefore, the ACK or the NACK and the receiving status level can be effectively determined.

In some embodiments, the determined HARQ feedback is the NACK, and the receiving status level for the PDSCH includes at least a first receiving status level and a second receiving status level. Determining the receiving status level based on the receiving performance includes: determining, based on that the receiving performance is lower than a first threshold, the receiving status level as the first status level, or determining, based on that the receiving performance is lower than a second threshold, the receiving status level as the second status level. Therefore, the receiving status level can be effectively determined based on the receiving performance when the HARQ feedback is determined to be the NACK.

In some embodiments, the determined HARQ feedback is the ACK, and the receiving status level for the PDSCH includes at least a first receiving status level and a second receiving status level. Determining the receiving status level based on the receiving performance includes: determining, based on that the receiving performance is higher than a third threshold, the receiving status level as the first status level, or determining, based on that the receiving performance is higher than a fourth threshold, the receiving status level as the second status level. Therefore, the receiving status level can be effectively determined based on the receiving performance when the HARQ feedback is determined to be the ACK.

In some embodiments, the indication information is included in the HARQ feedback for the HARQ process. In this way, effective transmission of the indication information is implemented.

In some embodiments, the HARQ feedback includes a first HARQ feedback and a second HARQ feedback, the first HARQ feedback indicates the ACK or the NACK, and the second HARQ feedback indicates the receiving status level. In this way, an ACK or NACK feedback and the indication information can be both indicated in the HARQ feedback.

In some embodiments, the first HARQ feedback includes one bit, and the second HARQ feedback includes at least one bit. Therefore, a joint feedback of the ACK or NACK feedback and the indication information can be effectively implemented.

In some embodiments, the HARQ feedback includes a plurality of bits, and the plurality of bits correspond to a plurality of values. Each of the plurality of values corresponds to one of one or more receiving status levels associated with the ACK or the NACK. Therefore, a finer-grained feedback of the receiving status level is implemented.

In some embodiments, the HARQ feedback includes two bits, and the two bits correspond to four values. One of the four values corresponds to one receiving status level associated with the ACK, and the other three of the four values respectively correspond to three receiving status levels associated with the NACK. Alternatively, one of the four values corresponds to one receiving status level associated with the NACK, and the other three of the four values respectively correspond to three receiving status levels associated with the ACK. Therefore, a finer-grained feedback of the receiving status level is implemented.

In some embodiments, the indication information is sent on a resource of a physical uplink control channel PUCCH or a physical uplink shared channel PUSCH. In this way, effective transmission of the indication information is implemented.

In some embodiments, the method further includes: The terminal device receives an indication for a resource from the network device by using radio resource control RRC signaling or the downlink control information. In this way, a transmission resource can be effectively determined.

In some embodiments, the method further includes: The terminal device sends a scheduling request for the resource to the network device. In this way, resource scheduling can be implemented based on the request.

In some embodiments, determining the receiving status level includes: The terminal device determines the receiving status level based on mutual information for the PDSCH. Therefore, the receiving status level can be effectively determined.

In some embodiments, the indication information is common indication information for a plurality of HARQ processes, and is used by the network device to determine a receiving status of the terminal device for a plurality of PDSCHs associated with the plurality of HARQ processes. Therefore, based on the common indication information, signaling overheads can be effectively reduced, and overall latency can be reduced.

A third aspect of the present disclosure provides a communication device. The communication device includes a processor and a memory that stores instructions. When the instructions are executed by the processor, a terminal device is enabled to perform the method in any one of the first aspect or the second aspect and the implementations of the first aspect or the second aspect.

A fourth aspect of the present disclosure provides a computer-readable storage medium. The computer-readable storage medium stores instructions, and when the instructions are executed by an electronic device, the electronic device is enabled to perform the method in any one of the first aspect or the second aspect and the implementations of the first aspect or the second aspect.

A fifth aspect of the present disclosure provides a computer program product. The computer program product includes instructions, and when the instructions are executed by an electronic device, the electronic device is enabled to perform the method in any one of the first aspect or the second aspect and the implementations of the first aspect or the second aspect.

It should be understood that the content described in the summary is not intended to limit a key or important feature of the present disclosure, and is not intended to limit the scope of the present disclosure. The following descriptions facilitate understanding of other features of the present disclosure.

BRIEF DESCRIPTION OF DRAWINGS

FIG. 1 is a diagram of a communication system in which an embodiment of the present disclosure may be implemented;
FIG. 2 is a signaling exchange diagram between a network device and a terminal device according to an embodiment of the present disclosure;
FIG. 3 is a schematic flowchart of a method implemented at a network device according to an embodiment of the present disclosure;
FIG. 4 is a schematic flowchart of a method implemented at a terminal device according to an embodiment of the present disclosure; and
FIG. 5 is a block diagram of an example communication device that may be used to implement an embodiment of the present disclosure.

Throughout all the accompanying drawings, same or similar reference numerals represent same or similar components.

DESCRIPTION OF EMBODIMENTS

Embodiments of the present disclosure are described in more detail in the following with reference to the accompanying drawings. Although some embodiments of the present disclosure are shown in the accompanying drawings, it should be understood that the present disclosure can be implemented in various forms, and should not be construed as being limited to embodiments described herein, and instead, these embodiments are provided for a more thorough and complete understanding of the present disclosure. It should be understood that the accompanying drawings and embodiments of the present disclosure are merely used as examples and are not intended to limit the protection scope of the present disclosure.

In descriptions of embodiments of the present disclosure, the term "including" and similar terms thereof should be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

Embodiments of the present disclosure may be implemented according to any appropriate communication protocol, including but not limited to cellular communication protocols such as 3rd generation (3rd Generation, 3G), 4th generation (4G), 5th generation (5G), and future communication protocols (for example, 6th generation (6G)), wireless local area network communication protocols such as the Institute of Electrical and Electronics Engineers (Institute of Electrical and Electronics Engineers, IEEE) 802.11, and/or any other protocols currently known or developed in future.

The technical solutions of embodiments of the present disclosure are applied to a communication system that complies with any proper communication protocol, for example, a general packet radio service (General Packet Radio Service, GPRS), a global system for mobile communications (Global System for Mobile Communications, GSM), an enhanced data rates for GSM evolution (Enhanced Data rates for GSM Evolution, EDGE) system, a universal mobile telecommunications system (Universal Mobile Telecommunications Service, UMTS), a long term evolution (Long Term Evolution, LTE) system, a wideband code division multiple access (Wideband Code Division Multiple Access, WCDMA) system, a code division multiple access 2000 (Code Division Multiple Access, CDMA2000) system, a time division-synchronous code division multiple access (Time Division-Synchronous Code Division Multiple Access, TD-SCDMA) system, a frequency division duplex (Frequency Division Duplex, FDD) system, a time division duplex (Time Division Duplex, TDD) system, a 5th generation (5G) system (for example, a new radio (New Radio, NR) system), a future communication system (for example, a 6th generation (6G) system), and the like.

For the purpose of illustration, the following describes embodiments of the present disclosure in the context of a 5G communication system in 3GPP. However, it should be understood that embodiments of the present disclosure are not limited to the communication system, but may be applied to any communication system having a similar problem, for example, a wireless local area network (WLAN), a wired communication system, or another communication system developed in the future.

The term "terminal device" or "terminal" used in the present disclosure refers to any terminal device that can perform wired or wireless communication with a network device or any terminal devices that can perform wired or wireless communication with each other. The terminal device may be sometimes referred to as customer-premises equipment (Customer-Premises Equipment, CPE) or user equipment (User Equipment, UE). The terminal device may be a mobile terminal, a fixed terminal, or a portable terminal of any type. The terminal device may be various wireless communication devices that have a wireless communication function. With emergence of an internet of things (Internet of Things, IoT) technology, more devices that previously have no communication function, for example without limitation to, a household appliance, a transportation tool, a tool device, a service device, and a service facility, start to obtain a wireless communication function by being configured with a wireless communication unit, to access a wireless communication network, and accept remote management. Such a device has the wireless communication function because the device is configured with the wireless communication unit, and therefore also belongs to a scope of a wireless communication device. In an example, the terminal device may include a mobile cellular phone, a cordless phone, a mobile terminal (Mobile Terminal, MT), a mobile station, a mobile device, a wireless terminal, a handheld device, a client, a subscription station, a portable subscription station, an internet node, a communicator, a desktop computer, a laptop computer, a notebook computer, a tablet computer, a personal communication system device, a personal navigation device, a personal digital assistant (Personal Digital Assistant, PDA), a wireless data card, a wireless modulator demodulator (Modulator demodulator, Modem), a positioning device, a radio broadcast receiver, and an e-book device, a game device, an internet of things (Internet of Things, IoT) device, a vehicle-mounted device, an airplane, a mobile internet device (mobile internet device, MID), a virtual reality (Virtual Reality, VR) device, an augmented reality (Augmented Reality, AR) device, a wearable device (for example, a smartwatch), a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a terminal device in a 5G network, or any terminal device in an evolved public land mobile network (Public Land Mobile Network, PLMN), another device that can be used for communication, or any combination thereof. This is not limited in embodiments of the present disclosure.

The term "network device" used in the present disclosure is an apparatus that may be deployed in a radio access network to provide a wireless communication function for a mobile terminal, for example, may be a radio access network (Radio Access Network, RAN) network device. The access network device may include base stations of various types. The base station is configured to provide a wireless access service for the terminal device. Specifically, each base station corresponds to a service coverage area, and a terminal device entering the area may communicate with the base station by using a radio signal, to receive a radio access service provided by the base station. The service coverage areas of the base stations may overlap, and a terminal device in an overlapping area may receive radio signals from a plurality of base stations. Therefore, the plurality of base stations may simultaneously provide services for the terminal device. Based on a size of the provided service coverage area, the access network device may include a macro base station providing a macro cell (Macro cell), a micro base station providing a micro cell (Pico cell), a pico base station providing a pico cell, and a femto base station providing a femto cell (Femto cell). In addition, the access network device may further include various forms of relay stations, access points, remote radio units (Remote Radio Units, RRUs), radio heads (Radio Heads, RHs), remote radio heads (Remote Radio Heads, RRHs), and the like. In systems using different radio access technologies, the access network device may have different names. For example, the access network device is referred to as an evolved NodeB (evolved NodeB, eNB or eNodeB) in a long term evolution (Long Term Evolution, LTE) network, is referred to as a NodeB (NodeB, NB) in a 3G network, and may be referred to as a gNodeB (gNB) or an NR NodeB (NR NB) in the 5G network. For example, the RAN network nodes may include a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), a wireless fidelity (wireless fidelity, Wi-Fi) access point (access point, AP), or the like. In a network structure, an access network device may include a central unit (central unit, CU) node, a distributed unit (distributed unit, DU) node, or a RAN device including a CU node and a DU node. The RAN device including the CU node and the DU node splits a protocol layer of a gNB in an NR system. Functions of a part of protocol layers are controlled by a CU in a centralized manner. Functions of a part or all of remaining protocol layers are distributed in a DU, and the CU controls the DU in a centralized manner. Further, the central unit CU may be further divided into a control plane (CU-CP) and a user plane (CU-UP). The CU-CP is responsible for a control plane function, and mainly includes RRC and a packet data convergence protocol (PDCP) corresponding to the control plane, that is, PDCP-C. The PDCP-C is mainly responsible for data encryption/decryption, integrity protection, data transmission, and the like on the control plane. The CU-UP is used to control a user plane function, and mainly includes a service data adaptation protocol (SDAP) and a PDCP corresponding to the user plane, that is, a PDCP-U. A main function of the SDAP is to process data of a core network and map a flow to a bearer. A main function of the PDCP-U is encryption/decryption, integrity protection, header compression, sequence number maintenance, data transmission, and the like on the data plane. The CU-CP and the CU-UP are connected through an interface E1. On behalf of the gNB, the CU-CP is connected to the core network through an NG interface, and is connected to the DU through an F1 interface-control plane, that is, F1-C. The CU-UP is connected to the DU through an F1 interface-user plane, that is, F1-U. Optionally, the PDCP-C may also be implemented in the CU-UP. For ease of description, in subsequent embodiments of the present disclosure, the foregoing apparatuses that provide a wireless communication function for the mobile terminal are collectively referred to as a network device. This is not specifically limited in embodiments of the present disclosure.

As mentioned above, MCS adaptation greatly affects transmission efficiency and performance of a communication system. The MCS adaptation is based on a combined effect of channel measurement and HARQ feedback, that is, based on inner and outer loop link adaptation. In the inner loop link adaptation, a terminal measures CSI based on a CSI-RS, and feeds back a measurement result to a base station. In the outer-loop link adaptation, the base station adjusts an MCS based on a HARQ feedback of sent downlink data.

In an enhanced mobile broadband (eMBB) scenario, a target block error rate (BLER) is 10e-1, and ACK/NACK-based outer loop link adaptation is very effective. However, in an ultra-reliable low-latency communication (URLLC) scenario, because a target BLER is 10e-5, and there are very few NACK feedbacks, the ACK/NACK-based OLLA does not work well. Consequently, channel and interference changes cannot be dynamically tracked. In addition, URLLC has a very high latency requirement, and the base station and the terminal do not have time to perform a plurality of rounds of HARQ retransmission. Therefore, additional information needs to be provided to the base station to ensure that retransmission scheduling is performed once, so that the terminal can successfully decode information sent by the base station.

In a technical solution, the OLLA is implemented based on a channel quality indicator (CQI) fed back by using the CSI and based on a HARQ feedback of a 1-bit ACK/NACK obtained by decoding a physical downlink shared channel (PDSCH). Specifically, the base station obtains a corresponding valid signal to interference plus noise ratio (SINR) based on the CQI reported by the terminal and based on a scheduling algorithm of the base station, that is, SINR_CQI. The base station obtains a scheduled SINR value by applying an SINR offset $\Delta$_OLLA to the valid SINR to select the MCS, that is, the scheduled SINR = SINR_CQI - $\Delta$_OLLA. Then, the base station sends the PDSCH to the terminal based on the selected MCS. On a terminal side, an ACK/NACK is fed back based on receiving performance for the PDSCH. If the terminal feeds back the ACK, the base station decreases the offset $\Delta$_OLLA $\leftarrow$ $\Delta$_OLLA + $\Delta$_UP. If UE feeds back the NACK, the base station increases the offset $\Delta$_OLLA $\leftarrow$ $\Delta$_OLLA - $\Delta$_DOWN. For example, a ratio of the offset $\Delta$_UP to the offset $\Delta$_DOWN is approximately 9: 1.

However, when the terminal feeds back the ACK or the NACK, an actual demodulated SINR at the terminal may be quite different from a target SINR. However, OLLA adjustment implemented at the base station is excessively slow. Consequently, the selected MCS is inappropriate and affects a burst service. Especially when, for example, a URLLC service has a very high latency requirement, the service is greatly affected. It can be learned that the foregoing OLLA adjustment procedure at the base station still has many problems that are difficult to overcome. Therefore, an improved OLLA adjustment manner is needed to accurately perform link adaptation, to better adapt to the receiving performance at the terminal.

In view of the foregoing descriptions, embodiments of the present disclosure provide a communication method. In the method, a network device sends downlink control information (DCI) to a terminal device. The downlink control information indicates an identifier of a hybrid automatic repeat request HARQ process, and the identifier of the HARQ process is associated with a PDSCH. The network device sends the PDSCH to the terminal device. Then, the network device receives indication information from the terminal device, where the indication information indicates a receiving status level of the terminal device for the PDSCH. The network device determines a receiving status of the terminal device for the PDSCH based on the indication information.

In this manner, the network device can quickly respond to real-time channel and interference changes, to meet requirements of a target BLER and latency, and increase a system transmission rate and reduce the latency in general.

The following further describes in detail this application with reference to the accompanying drawings. Specific operation methods, function descriptions, and the like in method embodiments may also be applied to apparatus embodiments or system embodiments.

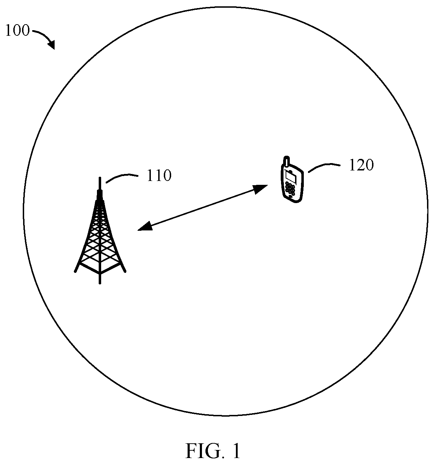

FIG. 1 is a diagram of a communication system 100 in which an embodiment of the present disclosure may be implemented. As shown in FIG. 1, the system 100 may include a network device 110 and a terminal device 120. The terminal device 120 may have a wireless transceiver function. The terminal device 120 can perform communication (for example, wireless communication) with one or more network devices in one or more communication systems, and accepts a network service provided by the network device. The network device herein includes but is not limited to the network device 110 shown in the figure. In some embodiments, the terminal device 120 may directly communicate with the network device 110. In some embodiments, the terminal device 120 may communicate with the network device 110 via another device. The network device 110 and user equipment 120 each may have a plurality of transmit antennas and a plurality of receive antennas.

In the system 100, after a connection is established, the network device 110 and the terminal device 120 may transmit data and control information to each other. A link from the network device to the terminal device 120 is referred to as a downlink (DL), and a link from the terminal device 120 to the network device is referred to as an uplink (UL). In the DL, the network device is a transmission (TX) device (or a transmitter), and the terminal device 120 is a reception (RX) device (or a receiver). In the UL, the terminal device 120 is a TX device (or a transmitter), and the network device is an RX device (or a receiver).

In some embodiments, the network device 110 sends downlink control information to the terminal device 120. For example, the downlink control information indicates an identifier of a hybrid automatic repeat request HARQ process. The identifier of the HARQ process is associated with a PDSCH. In an example, the identifier of the HARQ process may be a HARQ process number (HARQ process number). Then, the network device 110 sends the PDSCH to the terminal device 120. Then, the terminal device 120 sends indication information to the network device 110. For example, the indication information may indicate a receiving status level of the terminal device for the PDSCH. The network device 110 determines a receiving status of the terminal device 120 for the PDSCH based on the indication information.

It should be understood that quantities of terminals and network devices shown in FIG. 1 are merely used as examples. There may be more or fewer terminals and network devices. This is not limited in the present disclosure.

In addition, it should be understood that the communication system 100 is applicable to various scenarios. For example, an application scenario of the communication system 100 includes but is not limited to an existing communication system like a 5th generation (5G) system or a new radio (new radio, NR) communication system, a future evolved communication system, or the like. In addition, it should also be understood that the foregoing communication may comply with any appropriate communication technology and a corresponding communication standard.

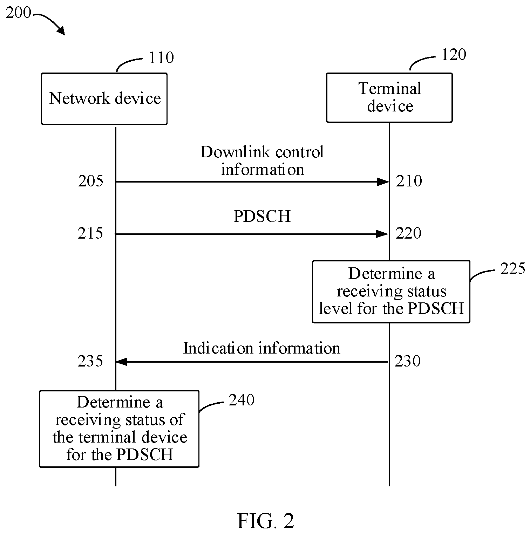

FIG. 2 is a signaling exchange diagram between a network device and a terminal device according to an embodiment of the present disclosure. For clarity of discussion without any limitation, a process 200 is discussed with reference to FIG. 1.

In the process 200, the network device 110 sends downlink control information to the terminal device 120 (205). The downlink control information may indicate an identifier of a HARQ process. The identifier of the HARQ process may be associated with a PDSCH. Correspondingly, the terminal device 120 receives the downlink control information from the network device 110 (210). Then, the network device 110 sends the PDSCH to the terminal device 120 (215). Correspondingly, the terminal device 120 receives the PDSCH from the network device 110 (210). The terminal device 120 may receive the PDSCH based on the received downlink control information.

As shown in FIG. 2, the terminal device 120 determines a receiving status level for the PDSCH (225). For example, the terminal device 120 may determine the receiving status level based on receiving performance for the PDSCH. For example, the receiving performance at the terminal device 120 may include demodulation performance and decoding performance.

In some embodiments, the terminal device 120 may determine, based on the receiving performance for the PDSCH, an ACK or a NACK of a HARQ feedback for the HARQ process and the receiving status level. In an example, when the determined HARQ feedback is the NACK, and the receiving status level for the PDSCH includes at least a first receiving status level and a second receiving status level, the terminal device may determine the receiving status level as follows: For example, the terminal device 120 may determine, based on that the receiving performance is lower than a first threshold, the receiving status level as the first status level; or the terminal device 120 may determine, based on that the receiving performance is lower than a second threshold, the receiving status level as the second status level. In another example, when the determined HARQ feedback is the ACK, and the receiving status level for the DSCH includes at least a first receiving status level and a second receiving status level, the terminal device may determine the receiving status level as follows: For example, the terminal device 120 may determine, based on that the receiving performance is higher than a third threshold, the receiving status level as the first status level; or the terminal device 120 may determine, based on that the receiving performance is higher than a fourth threshold, the receiving status level as the second status level. It should be understood that the foregoing quantity of receiving status levels is merely an example and is not intended to impose a limitation. Based on actual needs, in embodiments of the present invention, any quantity of receiving status levels may be implemented. It should also be understood that a quantity of thresholds is merely an example, and a value of the threshold may be arbitrarily implemented.

In an example, the terminal device 120 may determine the receiving status level based on mutual information for the PDSCH. In an example, the mutual information $I_E$ may be determined based on the following formula 1:

$$I_E \approx 1 - \frac{1}{N_c} \sum_{n=1}^{N_c} \left[ log_2 \left( 1 + e^{-x[n] \cdot L_e[n]} \right) \right] \qquad \text{(Formula 1)}$$

$N_c$ represents a quantity of information bits, $x[n]$ represents the information bit, also referred to as a source information bit (with a value of 0 or 1), and $L_e[n]$ represents a soft decision probability (that is, a maximum likelihood probability).

In another example, the mutual information $I_E$ may be determined based on the following formula 2:

$$I_E \approx \frac{1}{N_c} \sum_{n=1}^{N_c} \left[ \frac{e^{L_e[n]}}{1+e^{L_e[n]}} log_2 \left( \frac{2e^{L_e[n]}}{1+e^{L_e[n]}} \right) + \frac{1}{1+e^{L_e[n]}} log_2 \left( \frac{2}{1+e^{L_e[n]}} \right) \right] \qquad \text{(Formula 2)}$$

$N_c$ represents a quantity of information bits, and $L_e[n]$ represents a soft decision probability.

For example, when the PDSCH is correctly decoded, the terminal device 120 may calculate the mutual information based on the foregoing formula 1 or formula 2. When the PDSCH is incorrectly decoded, the terminal device 120 may calculate the mutual information based on the formula 2. Then, the terminal device 120 may map the mutual information to an equivalent SINR, and determine the receiving status level based on a difference between the equivalent SINR and a target SINR.

As shown in FIG. 2, the terminal device 120 sends indication information to the network device 110 (230). The indication information may indicate the receiving status level for the PDSCH. Correspondingly, the network device 110 receives the indication information from the terminal device 120 (235).

In some embodiments, the indication information may be included in a HARQ feedback for the HARQ process. For example, the HARQ feedback may include a first HARQ feedback and a second HARQ feedback. The first HARQ feedback may indicate the ACK or the NACK, and the second HARQ feedback may indicate the receiving status level. In an example implementation, the first HARQ feedback may include one bit, and the second HARQ feedback may include at least one bit. For example, the HARQ feedback may include two bits. One bit indicates the ACK or the NACK, and the other bit may indicate the receiving status level, that is, in this example, one bit may indicate two receiving status levels. In an example implementation, the HARQ feedback may include a plurality of bits, and the plurality of bits may correspond to a plurality of values. Each of the plurality of values corresponds to one of one or more receiving status levels associated with the ACK or the NACK. For example, the HARQ feedback may include two bits, and the two bits correspond to four values. One of the four values may indicate the ACK (that is, in this example, the ACK corresponds to only one receiving status level), and the other three of the four values may indicate three receiving status levels corresponding to the NACK. It should be understood that the foregoing values are merely examples, and this embodiment of the present disclosure is not limited thereto. In other words, in this embodiment of the present disclosure, a HARQ feedback of any quantity of bits, indication information of any quantity of bits, and any quantity of receiving status levels can be implemented.

In some other embodiments, the indication information may be sent on a resource of a physical uplink control channel (PUCCH) or a physical uplink shared channel (PUSCH). For example, the resource may be preconfigured. In another example, the resource may be allocated based on a request of a user. For example, the terminal device 120 may send a scheduling request for the resource to the network device 110. After receiving the scheduling request, the network device 110 sends an indication for the resource to the terminal device 120 by using radio resource control RRC signaling or the downlink control information. Then, the terminal device 120 may send the indication information on an allocated dedicated resource. For example, the network device 110 may configure a dedicated resource on the PUCCH by using higher layer RRC signaling. In another example, the network device 110 may schedule a dedicated resource on the PUCCH by using the downlink control information. In some embodiments, the scheduling request may be a request that is sent by the terminal device 120 to the network device 110 and that is dedicated to requesting the dedicated resource. Optionally, the terminal device 120 may additionally request the dedicated resource based on a scheduling request for another purpose. For example, the terminal device 120 may send, to the network device 110, a scheduling request (for example, a scheduling request for an uplink data channel PUSCH) for transmitting other data, and bind the indication information to the scheduling request, in other words, request, from the network device 110 in the scheduling request, a resource for transmitting other data and for transmitting the indication information. In other words, the indication information and the scheduling request occupy a same PUSCH or PUCCH resource for transmission. In this manner, the scheduling request does not occupy an information bit, and whether to send the receiving status level indicated by the determining indication information on a dedicated resource may be reported by using the scheduling request of the uplink data channel PUSCH or a dedicated scheduling request of the indication information.

In some other embodiments, the indication information may be common indication information for a plurality of HARQ processes, and is used by the network device 110 to determine a receiving status of the terminal device 120 for a plurality of PDSCHs associated with the plurality of HARQ processes. In an embodiment in which the indication information is included in the HARQ feedback for the HARQ process, the indication information may be implemented, for example, based on a HARQ codebook. Two HARQ processes are used as examples, and two PDSCHs corresponding to the two HARQ processes may be respectively represented as a PDSCH 1 and a PDSCH 2. If two receiving status levels for the PDSCH 1 and the PDSCH 2 are consistent, the receiving status levels may be jointly represented. For example, a 1st bit of the HARQ feedback may indicate a common receiving status level for the PDSCH 1 and the PDSCH 2, and other bits respectively indicate an ACK or NACK feedback corresponding to process numbers of the PDSCH 1 and the PDSCH 2.

In an example, a joint representation based on the HARQ codebook may be as follows:

| Common indication information | PDSCH 1 | PDSCH 2 |
| --- | --- | --- |
| 0 | 1 | 1 |

Common indication information of the 1st bit being 0, for example, may indicate that the receiving status level for the PDSCH 1 and the receiving status level for the PDSCH 2 are both a receiving status level 1, a 2nd bit being 1 may indicate that a HARQ feedback for the PDSCH 1 is the ACK, and a 3rd bit being 1 may indicate that a HARQ feedback for the PDSCH 2 is the ACK.

In another example, a joint representation based on the HARQ codebook may be as follows:

| Common indication information | PDSCH 1 | PDSCH 2 |
| --- | --- | --- |
| 1 | 1 | 0 |

Common indication information of the 1st bit being 1, for example, may indicate that the receiving status level for the PDSCH 1 and the receiving status level for the PDSCH 2 are both a receiving status level 2, a 2nd bit being 1 may indicate that a HARQ feedback for the PDSCH 1 is the ACK, and a 3rd bit being 1 may indicate that a HARQ feedback for the PDSCH 2 is the NACK.

As shown in FIG. 2, the network device 110 determines a receiving status of the terminal device 120 for the PDSCH based on the indication information (240).

In some embodiments, the network device 110 may obtain the HARQ feedback for the HARQ process from the terminal device 120. The HARQ feedback may include, for example, other indication information to indicate the ACK or the NACK. Then, the network device 110 may determine the receiving status level the terminal device 120 for the PDSCH based on the indication information and the other indication information. In an example, when the HARQ feedback indicates the NACK, and the receiving status level for the PDSCH includes at least the first receiving status level and the second receiving status level, the network device may determine the receiving status of the terminal device 120 for the PDSCH as follows: For example, the network device 110 may determine, based on that the indication information indicates the first receiving status level, that the receiving performance of the terminal device 120 for the PDSCH is lower than the first threshold; or the network device 110 may determine, based on that the indication information indicates the second receiving status level, that the receiving performance of the terminal device 120 for the PDSCH is lower than the second threshold. In another example, when the HARQ feedback indicates the ACK, and the receiving status level for the PDSCH includes at least the first receiving status level and the second receiving status level, the network device may determine the receiving status of the terminal device 120 for the PDSCH as follows: For example, the network device 110 may determine, based on that the indication information indicates the first receiving status level, that the receiving performance of the terminal device 120 for the PDSCH is higher than the third threshold; or the network device 110 may determine, based on that the indication information indicates the second receiving status level, that the receiving performance of the terminal device 120 for the PDSCH is higher than the fourth threshold.

In some embodiments, the network device 110 may determine, based on the indication information, an MCS used for the PDSCH for the terminal device 120.

For example, the network device 110 may determine a target adjustment amount from a plurality of candidate adjustment amounts (that is, a plurality of candidate adjustment amounts for SINR adjustment) for OLLA based on the indication information, determine an adjusted SINR value based on the target adjustment amount, and then determine the MCS used for the PDSCH for the terminal device 120. For example, when the plurality of candidate adjustment amounts include at least a first candidate adjustment amount and a second candidate adjustment amount, and the receiving status level for the PDSCH includes at least the first receiving status level and the second receiving status level, the network device 110 may determine the target adjustment amount as follows: For example, the network device 110 may determine, based on that the indication information indicates the first receiving status level, the target adjustment amount as the first candidate adjustment amount; or the network device 110 may determine, based on that the indication information indicates the second receiving status level, the target adjustment amount as the second candidate adjustment amount. Then, the network device 110 may adjust the OLLA by adjusting an SINR. For example, when the HARQ feedback indicates the NACK, the network device 110 may determine, based on that the determined target adjustment amount is the first candidate adjustment amount, an adjusted SINR as a previous SINR minus the first candidate adjustment amount; or the network device 110 may determine, based on that the determined target adjustment amount is the second candidate adjustment amount, an adjusted SINR as a previous SINR minus the second candidate adjustment amount. In another example, when the HARQ feedback indicates the ACK, the network device 110 may determine, based on that the determined target adjustment amount is the first candidate adjustment amount, an adjusted SINR as a previous SINR plus the first candidate adjustment amount; or the network device 110 may determine, based on that the determined target adjustment amount is the second candidate adjustment amount, an adjusted SINR as a previous SINR plus the second candidate adjustment amount. It should be understood that the adjustment amount is a positive value.

The following provides a specific example implementation of determining the SINR adjustment by the network device 110. For example, the network device 110 may first convert a CQI reported for the device 120 into a valid SINR, that is, SINR_CQI. Then, the network device 110 obtains an adjusted SINR value by applying an SINR offset $\Delta$_OLLA to the valid SINR, that is, SINR = SINR_CQI - $\Delta$_OLLA. In an example, the SINR offset $\Delta$_OLLA may be determined as follows: In this example implementation in which the indication information is included in the HARQ feedback for the HARQ process, the indication information fed back by the terminal device 120 includes two bits. A 1st bit indicates the ACK (with a value of 1) or the NACK (with a value of 0), and a 2nd bit indicates the receiving status level (that is, the first receiving status level and the second receiving status level). The network device 110 may determine the SINR offset $\Delta$_OLLA as follows:

If the HARQ feedback is 01, the base station increases the offset $\Delta$_OLLA$\leftarrow\Delta$_OLLA+ $\Delta$_UP1.
If the HARQ feedback is 00, the base station increases the offset $\Delta$_OLLA$\leftarrow\Delta$_OLLA+ $\Delta$_UP2.
If the HARQ feedback is 10, the base station decreases the offset $\Delta$_OLLA$\leftarrow\Delta$_OLLA - $\Delta$_DOWN2.
If the HARQ feedback is 11, the base station decreases the offset $\Delta$_OLLA$\leftarrow\Delta$_OLLA - $\Delta$_DOWN1.

It should be understood that a value 00/01/10/11 of the HARQ depends on a specific implementation of the terminal device 120, provided that the value is consistent with that in an enhanced OLLA manner at the network device 110. This is not limited in this embodiment of the present disclosure.

In this manner, the foregoing enhanced OLLA solution can be used to adaptively and quickly adjust the OLLA based on more accurate feedback information, so that the network device 110 can quickly respond to real-time channel and interference changes, and configure an MCS to match a channel feature in real time based on such changes, to support more accurate channel capacity matching, so as to improve a system capacity and reduce overall latency when target BLER and latency requirements are met.

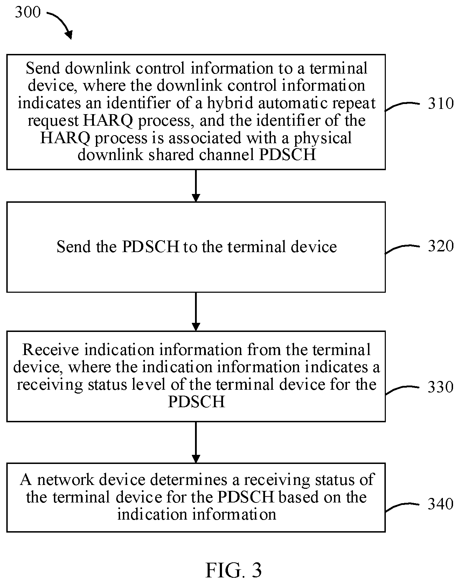

It should be understood that, in the foregoing embodiment, an example in which the network device 110 sends the PDSCH to the terminal device 120, and the terminal device 120 feeds back the receiving status for the PDSCH to the network device 110 is merely used. The scope of the present disclosure is not limited thereto. Embodiments of the present disclosure are also applicable to a scenario in which the terminal device 120 sends the PUSCH to the network device 110, and the network device 110 feeds back a receiving status for the PUSCH to the terminal device 120. FIG. 3 is a schematic flowchart of a method 300 implemented at a network device according to an embodiment of the present disclosure. In a possible implementation, the method 300 may be implemented by the network device 110 in the communication system 100 shown in FIG. 1. In another possible implementation, the method 300 may alternatively be implemented by another communication device independent of the communication system 100. For ease of discussion without any limitation, the method 300 is described below with reference to FIG. 1.

At a block 310, the network device 110 sends downlink control information to a terminal device 120, where the downlink control information indicates an identifier of a hybrid automatic repeat request HARQ process, and the identifier of the HARQ process is associated with a physical downlink shared channel PDSCH. At a block 320, the network device 110 sends the PDSCH to the terminal device 120. At a block 330, the network device 110 receives indication information from the terminal device 120, where the indication information indicates a receiving status level of the terminal device 120 for the PDSCH. At a block 340, the network device 110 determines a receiving status of the terminal device 120 for the PDSCH based on the indication information. In some embodiments, the network device 110 may further obtain a HARQ feedback for a HARQ process from the terminal device 120, where the HARQ feedback includes other indication information, and the other indication information indicates an acknowledgment ACK or a negative acknowledgment NACK. In these embodiments, in a process of determining the receiving status level of the terminal device 120 for the PDSCH, the network device 110 may determine the receiving status level of the terminal device 120 for the PDSCH based on the indication information and the other indication information. In some embodiments, the HARQ feedback indicates the NACK, and the receiving status level for the PDSCH includes at least a first receiving status level and a second receiving status level. The network device 110 may determine, based on that the indication information indicates the first receiving status level, that receiving performance of the terminal device 120 for the PDSCH is lower than a first threshold; or the network device 110 determines, based on that the indication information indicates the second receiving status level, that receiving performance of the terminal device 120 for the PDSCH is lower than a second threshold. In some embodiments, the HARQ feedback indicates the ACK, and the receiving status level for the PDSCH includes at least a first receiving status level and a second receiving status level. The network device 110 may determine, based on that the indication information indicates the first receiving status level, that receiving performance of the terminal device 120 for the PDSCH is higher than a third threshold; or the network device 110 determines, based on that the indication information indicates the second receiving status level, that receiving performance of the terminal device 120 for the PDSCH is higher than a fourth threshold.

In some embodiments, the indication information may be included in the HARQ feedback. In some embodiments, the HARQ feedback may include a first HARQ feedback and a second HARQ feedback, the first HARQ feedback indicates the ACK or the NACK, and the second HARQ feedback indicates the receiving status level. In some embodiments, the first HARQ feedback may include one bit, and the second HARQ feedback may include at least one bit. In some embodiments, the HARQ feedback may include a plurality of bits, and the plurality of bits correspond to a plurality of values. Each of the plurality of values corresponds to one of one or more receiving status levels associated with the ACK or the NACK. In some embodiments, the HARQ feedback may include two bits, and the two bits correspond to four values. One of the four values corresponds to one receiving status level associated with the ACK, and the other three of the four values respectively correspond to three receiving status levels associated with the NACK. Alternatively, one of the four values corresponds to one receiving status level associated with the NACK, and the other three of the four values respectively correspond to three receiving status levels associated with the ACK.

In some embodiments, the indication information may be received on a resource of a physical uplink control channel PUCCH or a physical uplink shared channel PUSCH. In some embodiments, the network device 110 may further send an indication for the resource to the terminal device 120 by using radio resource control RRC signaling or the downlink control information. In some embodiments, the network device 110 may further receive a scheduling request for the resource from the terminal device 120.

In some embodiments, the network device 110 may further determine, based on the indication information, a modulation and coding scheme MCS used for the PDSCH for the terminal device 120. In some embodiments, the network device 110 may further determine, based on the indication information, a target adjustment amount from a plurality of candidate adjustment amounts for outer loop link adaptation OLLA. In addition, determining the MCS used for the PDSCH for the terminal device 120 includes: The network device 110 determines, based on the target adjustment amount, the MCS used for the PDSCH for the terminal device 120. In some embodiments, the plurality of candidate adjustment amounts may include at least a first candidate adjustment amount and a second candidate adjustment amount, and the receiving status level for the PDSCH includes at least the first receiving status level and the second receiving status level. In addition, that the network device 110 may determine the target adjustment amount based on one of the following: determining, based on that the indication information indicates the first receiving status level, the target adjustment amount as the first candidate adjustment amount; or determining, based on that the indication information indicates the second receiving status level, the target adjustment amount as the second candidate adjustment amount. In some embodiments, the HARQ feedback indicates the NACK, the OLLA is associated with signal to interference plus noise ratio SINR adjustment, and the network device 110 may further adjust an SINR in the following manner: The network device 110 determines, based on that the determined target adjustment amount is the first candidate adjustment amount, an adjusted SINR as a previous SINR minus the first candidate adjustment amount; or the network device 110 determines, based on that the determined target adjustment amount is the second candidate adjustment amount, an adjusted SINR as a previous SINR minus the second candidate adjustment amount. In some embodiments, the HARQ feedback indicates the ACK, the OLLA is associated with SINR adjustment, and the network device 110 may further adjust an SINR in the following manner: The network device 110 determines, based on that the determined target adjustment amount is the first candidate adjustment amount, an adjusted SINR as a previous SINR plus the first candidate adjustment amount; or the network device 110 determines, based on that the determined target adjustment amount is the second candidate adjustment amount, an adjusted SINR as a previous SINR plus the second candidate adjustment amount.

In some embodiments, the indication information may be common indication information for a plurality of HARQ processes, and is used by the network device 110 to determine a receiving status of the terminal device 120 for a plurality of PDSCHs associated with the plurality of HARQ processes.

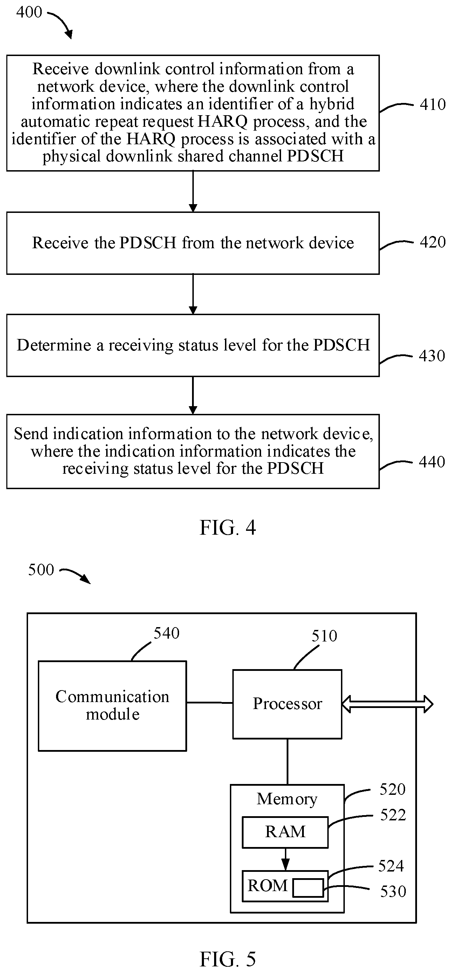

FIG. 4 is a schematic flowchart of a method 400 implemented at a terminal device according to an embodiment of the present disclosure. In a possible implementation, the method 400 may be implemented by the terminal device 120 in the communication system 100 shown in FIG. 1. In another possible implementation, the method 400 may alternatively be implemented by another communication device independent of the communication system 100. For ease of discussion without any limitation, the method 400 is described below with reference to FIG. 1.

At a block 410, the terminal device 120 receives downlink control information from a network device 110, where the downlink control information indicates an identifier of a hybrid automatic repeat request HARQ process, and the identifier of the HARQ process is associated with a physical downlink shared channel PDSCH. At a block 420, the terminal device 120 receives the PDSCH from the network device 110. At a block 430, the terminal device 120 determines a receiving status level for the PDSCH. At a block 440, the terminal device 120 sends indication information to the network device 110, where the indication information indicates the receiving status level for the PDSCH.

In some embodiments, the terminal device 120 may further determine, based on receiving performance for the PDSCH, an acknowledgment ACK or a negative acknowledgment NACK of a HARQ feedback for a HARQ process and the receiving status level. In some embodiments, the determined HARQ feedback is the NACK, and the receiving status level for the PDSCH includes at least a first receiving status level and a second receiving status level. The network device 110 may determine, based on that the receiving performance is lower than a first threshold, the receiving status level as the first status level, or determine, based on that the receiving performance is lower than a second threshold, the receiving status level as the second status level. In some embodiments, the determined HARQ feedback is the ACK, and the receiving status level for the PDSCH includes at least a first receiving status level and a second receiving status level. The network device 110 may determine, based on that the receiving performance is higher than a third threshold, the receiving status level as the first status level, or determine, based on that the receiving performance is higher than a fourth threshold, the receiving status level as the second status level.

In some embodiments, the indication information may be included in the HARQ feedback for the HARQ process. In some embodiments, the HARQ feedback may include a first HARQ feedback and a second HARQ feedback, the first HARQ feedback indicates the ACK or the NACK, and the second HARQ feedback indicates the receiving status level. In some embodiments, the first HARQ feedback may include one bit, and the second HARQ feedback may include at least one bit. In some embodiments, the HARQ feedback may include a plurality of bits, and the plurality of bits correspond to a plurality of values. Each of the plurality of values corresponds to one of one or more receiving status levels associated with the ACK or the NACK. In some embodiments, the HARQ feedback may include two bits, and the two bits correspond to four values. One of the four values corresponds to one receiving status level associated with the ACK, and the other three of the four values respectively correspond to three receiving status levels associated with the NACK. Alternatively, one of the four values corresponds to one receiving status level associated with the NACK, and the other three of the four values respectively correspond to three receiving status levels associated with the ACK.

In some embodiments, the indication information may be sent on a resource of a physical uplink control channel PUCCH or a physical uplink shared channel PUSCH. In some embodiments, the terminal device 120 may further receive an indication for the resource from the network device 110 by using radio resource control RRC signaling or the downlink control information. In some embodiments, the terminal device 120 may further send a scheduling request for the resource to the network device 110.

In some embodiments, the terminal device 120 may determine the receiving status level based on mutual information for the PDSCH.

In some embodiments, the indication information may be common indication information for a plurality of HARQ processes, and is used by the network device 110 to determine a receiving status of the terminal device 120 for a plurality of PDSCHs associated with the plurality of HARQ processes.

FIG. 5 is a block diagram of an example communication device 500 that may be used to implement an embodiment of the present disclosure. The device 500 may be implemented as or include the network device 110 or the terminal device 120 in FIG. 1. As shown in the figure, the device 500 includes one or more processors 510, one or more memories 520 coupled to the processor 510, and a communication module 540 coupled to the processor 510.

The communication module 540 may be configured for bidirectional communication. The communication module 540 may have at least one communication interface for communication. The communication interface may include any interface necessary for communicating with another device.

The processor 510 may be of any type suitable for a local technology network, and may include but is not limited to at least one of the following: one or more of a general-purpose computer, a dedicated computer, a microcontroller, a digital signal processor (Digital Signal Processor, DSP), or a controller-based multi-core controller architecture. The device 500 may have a plurality of processors, such as an application-specific integrated circuit chip, which in terms of time, belongs to a clock synchronized with a main processor.

The memory 520 may include one or more non-volatile memories and one or more volatile memories. An example of the non-volatile memory includes but is not limited to at least one of the following: a read-only memory (Read-Only Memory, ROM) 524, an erasable programmable read-only memory (Erasable Programmable Read-Only Memory, EPROM), a flash memory, a hard disk, a compact disc (Compact Disc, CD), a digital versatile disc (Digital Versatile Disc, DVD), or other magnetic storage and/or optical storage. An example of the volatile memory includes but is not limited to at least one of the following: a random access memory (Random Access Memory, RAM) 522, or another volatile memory that does not persist during power-off duration.

A computer program 530 includes computer-executable instructions executed by an associated processor 510. The program 530 may be stored in the ROM 524. The processor 510 may perform any proper action and processing by loading the program 530 into the RAM 522.

Embodiments of the present disclosure may be implemented by using the program 530, so that the device 500 can perform any process discussed with reference to FIG. 1 to FIG. 4. Embodiments of the present disclosure may alternatively be implemented by using hardware or a combination of software and hardware.

The program 530 may be tangibly included in a computer-readable medium, and the computer-readable medium may be included in the device 500 (for example, in the memory 520) or another storage device that is accessible by the device 500. The program 530 may be loaded from the computer-readable medium to the RAM 522 for execution. The computer-readable medium may include any type of tangible non-volatile memory, for example, a ROM, an EPROM, a flash memory, a hard disk, a CD, or a DVD.

In some embodiments, the communication module 540 in the device 500 may be implemented as a transmitter and a receiver (or a transceiver). **In** addition, the device 500 may further include one or more of a scheduler, a controller, and a radio frequency/antenna. Details are not described in the present disclosure.

For example, the device 500 in FIG. 5 may be implemented as an electronic device, or may be implemented as a chip or a chip system in the electronic device. This is not limited in embodiments of the present disclosure.

An embodiment of the present disclosure further provides a chip. The chip may include an input interface, an output interface, and a processing circuit. **In** this embodiment of the present disclosure, the input interface and the output interface may complete signaling or data interaction, and the processing circuit may complete generation and processing of signaling or data information.

An embodiment of the present disclosure further provides a chip system, including a processor, configured to support a computing device in implementing the function in any one of the foregoing embodiments. **In** a possible design, the chip system may further include a memory, configured to store necessary program instructions and data. When the processor runs the program instructions, a device in which the chip system is installed is enabled to implement the method in any one of the foregoing embodiments. For example, the chip system may include one or more chips, or may include a chip and another discrete device.

An embodiment of the present disclosure further provides a processor, configured to be coupled to a memory. The memory stores instructions. When the processor runs the instructions, the processor is enabled to perform the method and the function in any one of the foregoing embodiments.

An embodiment of the present disclosure further provides a computer program product including instructions. When the computer program product runs on a computer, the computer is enabled to perform the method and the function in any one of the foregoing embodiments.

An embodiment of the present disclosure further provides a computer-readable storage medium. The computer-readable storage medium stores computer instructions. When a processor runs the instructions, the processor is enabled to perform the method and the function in any one of the foregoing embodiments.

Usually, various embodiments of the present disclosure may be implemented by hardware or a dedicated circuit, software, logic, or any combination thereof. Some aspects may be implemented by hardware, and other aspects may be implemented by firmware or software, and may be executed by a controller, a microprocessor, or another computing device. Although various aspects of embodiments of the present disclosure are shown and described as block diagrams, flowcharts, or some other figures, it should be understood that the blocks, apparatuses, systems, techniques, or methods described in this specification may be implemented as, for example, non-limiting examples, hardware, software, firmware, dedicated circuits or logic, general-purpose hardware, controllers, other computing devices, or a combination thereof.

The present disclosure further provides at least one computer program product tangibly stored in a non-transitory computer-readable storage medium. The computer program product includes computer-executable instructions, such as instructions included in a program module, which are executed in a device on a real or virtual target processor to perform the process/method as described above with reference to the accompanying drawings. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions for the program module may be executed locally or in a distributed device. In the distributed device, the program module may be locally located and located in a remote storage medium.

Computer program code for implementing the method disclosed in the present disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of the present disclosure, the computer program code or related data may be carried in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any suitable combination thereof.

In addition, although the operations of the method in the present disclosure are described in a particular order in the accompanying drawings, this does not require or imply that these operations need to be performed in the particular order, or that all the operations shown need to be performed to achieve the desired results. Instead, execution sequences of the steps depicted in the flowcharts may change. Additionally or alternatively, some steps may be omitted, a plurality of steps may be combined into one step for execution, and/or one step may be broken down into a plurality of steps for execution. It should further be noted that, the features and functions of two or more apparatuses according to the present disclosure may be specific in one apparatus. Instead, features and functions of one apparatus described above may be further specific in a plurality of apparatuses. The foregoing has described various implementations of the present disclosure. The foregoing descriptions are examples, are not exhaustive, and are not limited to the disclosed implementations. Many modifications and changes are clear to a person of ordinary skill in the art without departing from the scope and spirit of the described implementations. Selection of the terms used in this specification is intended to well explain principles of the implementations, actual applications, or improvements to technologies in the market, or to enable another person of ordinary skill in the art to understand the implementations disclosed in this specification.

**Claims**

1. A communication method, comprising:

   sending, by a network device, downlink control information to a terminal device, wherein the downlink control information indicates an identifier of a hybrid automatic repeat request HARQ process, and the identifier of the HARQ process is associated with a physical downlink shared channel PDSCH;
   sending, by the network device, the PDSCH to the terminal device;
   receiving, by the network device, indication information from the terminal device, wherein the indication information indicates a receiving status level of the terminal device for the PDSCH; and
   determining, by the network device, a receiving status of the terminal device for the PDSCH based on the indication information.

2. The method according to claim 1, wherein the method further comprises:

   obtaining, by the network device, a HARQ feedback for the HARQ process from the terminal device, wherein the HARQ feedback comprises other indication information, and the other indication information indicates an acknowledgment ACK or a negative acknowledgment NACK; and
   determining the receiving status level of the terminal device for the PDSCH comprises:
   determining, by the network device, the receiving status level of the terminal device for the PDSCH based on the indication information and the other indication information.

3. The method according to claim 2, wherein the HARQ feedback indicates the NACK, the receiving status level for the PDSCH comprises at least a first receiving status level and a second receiving status level, and determining the receiving status of the terminal device for the PDSCH comprises:

   determining, by the network device based on that the indication information indicates the first receiving status level, that receiving performance of the terminal device for the PDSCH is lower than a first threshold; or
   determining, by the network device based on that the indication information indicates the second receiving status level, that receiving performance of the terminal device for the PDSCH is lower than a second threshold.

4. The method according to claim 2, wherein the HARQ feedback indicates the ACK, the receiving status level for the PDSCH comprises at least a first receiving status level and a second receiving status level, and determining the receiving status of the terminal device for the PDSCH comprises:

   determining, by the network device based on that the indication information indicates the first receiving status level, that receiving performance of the terminal device for the PDSCH is higher than a third threshold; or determining, by the network device based on that the indication information indicates the second receiving status level, that receiving performance of the terminal device for the PDSCH is higher than a fourth threshold.

5. The method according to any one of claims 2 to 4, wherein the indication information is comprised in the HARQ feedback.

6. The method according to claim 5, wherein the HARQ feedback comprises a first HARQ feedback and a second HARQ feedback, the first HARQ feedback indicates the ACK or the NACK, and the second HARQ feedback indicates the receiving status level.

7. The method according to claim 6, wherein the first HARQ feedback comprises one bit, and the second HARQ feedback comprises at least one bit.

8. The method according to claim 6, wherein the HARQ feedback comprises a plurality of bits, the plurality of bits correspond to a plurality of values, and each of the plurality of values corresponds to one of one or more receiving status levels associated with the ACK or the NACK.

9. The method according to claim 8, wherein the HARQ feedback comprises two bits, the two bits correspond to four values, and

   one of the four values corresponds to one receiving status level associated with the ACK, and the other three of the four values respectively correspond to three receiving status levels associated with the NACK; or
   one of the four values corresponds to one receiving status level associated with the NACK, and the other three of the four values respectively correspond to three receiving status levels associated with the ACK.

10. The method according to any one of claims 2 to 4, wherein the indication information is received on a resource of a physical uplink control channel PUCCH or a physical uplink shared channel PUSCH.

11. The method according to claim 10, further comprising:
    sending, by the network device, an indication for the resource to the terminal device by using radio resource control RRC signaling or the downlink control information.

12. The method according to claim 10 or 11, further comprising:
    receiving, by the network device, a scheduling request for the resource from the terminal device.

13. The method according to any one of claims 2 to 12, further comprising:
    determining, by the network device based on the indication information, a modulation and coding scheme MCS used for the PDSCH for the terminal device.

14. The method according to claim 13, further comprising:

    determining, by the network device, a target adjustment amount from a plurality of candidate adjustment amounts for outer loop link adaptation OLLA based on the indication information; and
    determining the MCS used for the PDSCH for the terminal device comprises:
    determining, by the network device based on the target adjustment amount, the MCS used for the PDSCH for the terminal device.

15. The method according to claim 14, wherein the plurality of candidate adjustment amounts comprise at least a first candidate adjustment amount and a second candidate adjustment amount, the receiving status level for the PDSCH comprises at least the first receiving status level and the second receiving status level, and determining the target adjustment amount comprises one of the following:

    determining, based on that the indication information indicates the first receiving status level, the target adjustment amount as the first candidate adjustment amount; or
    determining, based on that the indication information indicates the second receiving status level, the target adjustment amount as the second candidate adjustment amount.

16. The method according to claim 15, wherein the HARQ feedback indicates the NACK, the OLLA is associated with signal to interference plus noise ratio SINR adjustment, and the method further comprises adjusting an SINR in the following manner:

determining, by the network device based on that the determined target adjustment amount is the first candidate adjustment amount, an adjusted SINR as a previous SINR minus the first candidate adjustment amount; or determining, by the network device based on that the determined target adjustment amount is the second candidate adjustment amount, an adjusted SINR as a previous SINR minus the second candidate adjustment amount.

17. The method according to claim 15, wherein the HARQ feedback indicates the ACK, the OLLA is associated with SINR adjustment, and the method further comprises adjusting an SINR in the following manner:

determining, by the network device based on that the determined target adjustment amount is the first candidate adjustment amount, an adjusted SINR as a previous SINR plus the first candidate adjustment amount; or determining, by the network device based on that the determined target adjustment amount is the second candidate adjustment amount, an adjusted SINR as a previous SINR plus the second candidate adjustment amount.

18. The method according to any one of claims 1 to 17, wherein the indication information is common indication information for a plurality of HARQ processes, and is used by the network device to determine a receiving status of the terminal device for a plurality of PDSCHs associated with the plurality of HARQ processes.

19. A communication method, comprising:

receiving, by a terminal device, downlink control information from a network device, wherein the downlink control information indicates an identifier of a hybrid automatic repeat request HARQ process, and the identifier of the HARQ process is associated with a physical downlink shared channel PDSCH;
receiving, by the terminal device, the PDSCH from the network device;
determining, by the terminal device, a receiving status level for the PDSCH; and
sending, by the terminal device, indication information to the network device, wherein the indication information indicates the receiving status level for the PDSCH.

20. The method according to claim 19, further comprising:
determining, by the terminal device based on receiving performance for the PDSCH, an acknowledgment ACK or a negative acknowledgment NACK of a HARQ feedback for the HARQ process and the receiving status level.

21. The method according to claim 20, wherein the determined HARQ feedback is the NACK, the receiving status level for the PDSCH comprises at least a first receiving status level and a second receiving status level, and determining the receiving status level based on the receiving performance comprises:

determining, based on that the receiving performance is lower than a first threshold, the receiving status level as the first status level; or
determining, based on that the receiving performance is lower than a second threshold, the receiving status level as the second status level.

22. The method according to claim 20, wherein the determined HARQ feedback is the ACK, the receiving status level for the PDSCH comprises at least a first receiving status level and a second receiving status level, and determining the receiving status level based on the receiving performance comprises:

determining, based on that the receiving performance is higher than a third threshold, the receiving status level as the first status level; or
determining, based on that the receiving performance is higher than a fourth threshold, the receiving status level as the second status level.

23. The method according to any one of claims 19 to 22, wherein the indication information is comprised in the HARQ feedback for the HARQ process.

24. The method according to claim 23, wherein the HARQ feedback comprises a first HARQ feedback and a second HARQ feedback, the first HARQ feedback indicates the ACK or the NACK, and the second HARQ feedback indicates the receiving status level.

25. The method according to claim 24, wherein the first HARQ feedback comprises one bit and the second HARQ feedback comprises at least one bit.

26. The method according to claim 24, wherein the HARQ feedback comprises a plurality of bits, the plurality of bits correspond to a plurality of values, and each of the plurality of values corresponds to one of one or more receiving status levels associated with the ACK or the NACK.

27. The method according to claim 26, wherein the HARQ feedback comprises two bits, the two bits correspond to four values, and

   one of the four values corresponds to one receiving status level associated with the ACK, and the other three of the four values respectively correspond to three receiving status levels associated with the NACK; or
   one of the four values corresponds to one receiving status level associated with the NACK, and the other three of the four values respectively correspond to three receiving status levels associated with the ACK.

28. The method according to any one of claims 19 to 22, wherein the indication information is sent on a resource of a physical uplink control channel PUCCH or a physical uplink shared channel PUSCH.

29. The method according to claim 28, further comprising:
   receiving, by the terminal device, an indication for the resource from the network device by using radio resource control RRC signaling or the downlink control information.

30. The method according to claim 28 or 29, further comprising:
   sending, by the terminal device, a scheduling request for the resource to the network device.

31. The method according to any one of claims 19 to 30, wherein determining the receiving status level comprises:
   determining, by the terminal device, the receiving status level based on mutual information for the PDSCH.

32. The method according to any one of claims 19 to 31, wherein the indication information is common indication information for a plurality of HARQ processes, and is used by the network device to determine a receiving status of the terminal device for a plurality of PDSCHs associated with the plurality of HARQ processes.

33. A communication device, comprising a processor and a memory storing instructions, wherein when the instructions are executed by the processor, the communication device is enabled to perform the method according to any one of claims 1 to 18 or any one of claims 19 to 32.

34. A computer-readable storage medium, wherein the computer-readable storage medium stores instructions, and when the instructions are executed by a communication device, the communication device is enabled to perform the method according to any one of claims 1 to 18 or any one of claims 19 to 32.

35. A computer program product, wherein the computer program product comprises instructions, and when the instructions are executed by a communication device, the communication device is enabled to perform the method according to any one of claims 1 to 18 or any one of claims 19 to 32.

FIG. 1

200

110

Network device

120

Terminal device

205

Downlink control information

210

215

PDSCH

220

Determine a receiving status level for the PDSCH

225

235

Indication information

230

Determine a receiving status of the terminal device for the PDSCH

240

FIG. 2

300 ⌐

```
┌─────────────────────────────────────────┐
│  Send downlink control information to a  │
│  terminal device, where the downlink     │
│  control information indicates an        │
│  identifier of a hybrid automatic repeat │ ⌐ 310
│  request HARQ process, and the identifier│
│  of the HARQ process is associated with  │
│  a physical downlink shared channel PDSCH│
└─────────────────────────────────────────┘
                    │
                    ▼
┌─────────────────────────────────────────┐
│                                          │
│   Send the PDSCH to the terminal device  │ ⌐ 320
│                                          │
└─────────────────────────────────────────┘
                    │
                    ▼
┌─────────────────────────────────────────┐
│  Receive indication information from the │
│  terminal device, where the indication   │
│  information indicates a receiving status│ ⌐ 330
│  level of the terminal device for the    │
│  PDSCH                                    │
└─────────────────────────────────────────┘
                    │
                    ▼
┌─────────────────────────────────────────┐
│  A network device determines a receiving │
│  status of the terminal device for the   │ ⌐ 340
│  PDSCH based on the indication information│
└─────────────────────────────────────────┘
```

FIG. 3

400 ⌐

| Receive downlink control information from a network device, where the downlink control information indicates an identifier of a hybrid automatic repeat request HARQ process, and the identifier of the HARQ process is associated with a physical downlink shared channel PDSCH | ⌐ 410 |

↓

| Receive the PDSCH from the network device | ⌐ 420 |

↓

| Determine a receiving status level for the PDSCH | ⌐ 430 |

↓

| Send indication information to the network device, where the indication information indicates the receiving status level for the PDSCH | ⌐ 440 |

FIG. 4

500 ⌐

FIG. 5

## INTERNATIONAL SEARCH REPORT

| International application No. |
|---|
| **PCT/CN2023/141544** |

| A. | CLASSIFICATION OF SUBJECT MATTER |
|---|---|

H04L 1/00(2006.01)i;　H04L5/00(2006.01)i

According to International Patent Classification (IPC) or to both national classification and IPC

| B. | FIELDS SEARCHED |
|---|---|

Minimum documentation searched (classification system followed by classification symbols)

IPC：H04L

Documentation searched other than minimum documentation to the extent that such documents are included in the fields searched

Electronic data base consulted during the international search (name of data base and, where practicable, search terms used)

3GPP; VEN; CNABS; CNTXT; USTXT; EPTXT; WOTXT; CNKI: 下行链路控制信息, 混合自动重传请求, 进程, 标识符, 物理下行链路共享信道, 关联, 发送, 指示, 接收, 状态, 水平, DCI, HARQ, process, ID, PDSCH, association, send+, indication, reception, status, level, ACK, NACK

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113994621 A (TELEFONAKTIEBOLAGET LM ERICSSON (PUBL)) 28 January 2022 (2022-01-28)<br>description, paragraphs [0042]-[0214] | 1-35 |
| A | WO 2022077522 A1 (HUAWEI TECHNOLOGIES CO., LTD.) 21 April 2022 (2022-04-21)<br>entire document | 1-35 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 March 2024** | **30 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/141544**

| Patent document cited in search report | | | Publication date (day/month/year) | Patent family member(s) | Publication date (day/month/year) |
|---|---|---|---|---|---|
| CN | 113994621 | A | 28 January 2022 | None | |
| WO | 2022077522 | A1 | 21 April 2022 | None | |

**EP 4 637 059 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211738148